Europäisches Patentamt

European Patent Office

Office européen des brevets

(11) Publication number: **0 327 170**
**A2**

## (12) EUROPEAN PATENT APPLICATION

(21) Application number: 89200181.9

(51) Int. Cl.4: **C08K 7/06 , C08J 9/00**

(22) Date of filing: 27.01.89

(30) Priority: 29.01.88 US 149748

(43) Date of publication of application:
09.08.89 Bulletin 89/32

(84) Designated Contracting States:
AT BE CH DE ES GB GR IT LI NL SE

(71) Applicant: THE DOW CHEMICAL COMPANY
2030 Dow Center Abbott Road P.O. Box 1967
Midland Michigan 48640-1967(US)

(72) Inventor: McCullough, Francis P., Jr.
104 Fir Drive
Lake Jackson Texas 75566(US)
Inventor: Snelgrove, R. Vernon
Rt. 1 Box 112
Damon Texas 77430(US)
Inventor: Goswami, Bhuvenesh C.
200 Strawberry Lane
Clemson South Carolina 29631(US)

(74) Representative: Smulders, Theodorus A.H.J.,
Ir. et al
Vereenigde Octrooibureaux Nieuwe Parklaan
107
NL-2587 BP 's-Gravenhage(NL)

(54) Flame retardant composite polymeric foams.

(57) A flame retardant composite structure comprising a polymeric foam having a synergistic amount of flame retarding, substantially irreversibly heat set, nonflammable, carbonaceous fibers provided on at least one surface of the foam and/or distributed within the foam, said fibers having an LOI value greater than 40.

EP 0 327 170 A2

## FLAME RETARDANT COMPOSITE POLYMERIC FOAMS

This invention relates to a flame retardant composite of a polymeric foam and nonflammable carbonaceous fibers and to a method for the production of a flame retardant composite. The polymeric foam composites are flame retardant over their exterior surfaces or throughout their entire structure.

The physical and mechanical properties of foams make them useful for a wide variety of applications, including, for example, upholstery and bedding. However, many polymeric foams, for example polyurethane, are inherently flammable and lead to melting and the spread of noxious gases and burning debris. In the case of many "conventional" foams, such characteristics lead to a self-sustaining combustion or progressive smoldering even after the actual flames have been extinguished.

It is considered that cellular materials (foams) manufactured from flammable polymers are more flammable than the solid polymeric materials because the insulating effect of their cellular nature allows a rapid buildup of heat at the surface that is subjected to heat or a flame with a consequential high rate of pyrolysis. In solid polymeric materials this heat buildup is at a lower rate because of the higher conductivity of the solid material. Although rigid foams have similar thermal conductivity behavior to flexible foams, the highly cross-linked nature of their chemical structure makes them less flammable as polymers and also inherently more inclined to form a protective char rather than to form flaming molten polymer droplets which occur with flexible foams. While solid and rigid cellular foam materials burn less easily than flexible foam materials and are easier to extinguish, they tend to have an increased smolder and emit a greater amount of toxic fumes.

Various methods are known to reduce the flammability of polymeric foams. Commonly, additives such as aluminum trihydride or phosphorus containing compounds are incorporated into the foam for this purpose. Alternatively, halogenated polyols, especially brominated polyols such as dibromoneopentyl glycol, are used to increase the flame resistance in the foam. None of these additives have proved entirely satisfactory.

It is known that the incorporation of trimerized polyisocyanates (i.e., isocyanurates) into a foam improves its fire retarding characteristics. For example, trimerized toluene diisocyanate has been used to prepare flexible foams. Although these foams exhibit good foam characteristics, they also have poor physical properties, particularly poor compression sets and partial cell collapse. In addition, trimerized toluene diisocyanate tends to precipitate from the isocyanate solution in which it is dissolved, causing storage problems and a lack of uniformity in foams prepared therewith.

Polymeric foam materials that are suitably employed in the present invention are selected from olefinic resins, styrenic resins, urethane resins, latex, urea, isocyanurate, and the like.

Each of U.S. Patent Nos. 4,554,293; 4,528,300 and 4,640,933 to Park disclose foam materials which can be used in the present invention.

U.S. Patent No. 4,699,931 to Fuzesi, et al discloses polyol free isocyanurate foams which can be used in the present invention.

U.S. Patent Nos. 4,489,913; 4,552,903; 4,574,137; 4,581,418 and 4,596,665 disclose different types of polyurethane foams which may be utilized in the invention.

U.S. Patent Nos. 3,770,668 and 3,960,792 disclose typical polystyrene foams which can be utilized in the present invention.

U.S. Patent No. 4,669,943 to Bertrand discloses self-extinguishing polystyrene foams with improved thermal properties. The foams are blended with a fire retarding agent consisting of tribromopentaerythritol. These are foams whose self-extinguishing characteristics can be further improved by the present invention.

European Patent Application Serial No. 0199567, published October 29, 1986, to F. P. McCullough, et al entitled, "Carbonaceous Fibers with Spring-Like Reversible Deflection and Method of Manufacture," discloses nonflammable carbonaceous fibers which can be suitably employed to provide flame retarding improvements in polymeric foams in accordance with the present invention.

The term "stabilized" as used herein applies to fibers or tows which have been oxidized at a specific temperature, typically less than about 250°C for acrylic fibers. It will be understood that in some instances the filament and/or fibers are oxidized by chemical oxidants at lower temperatures.

The term "reversible deflection" as used herein applies to a helical or sinusoidal compression spring. Particular reference is made to the publication, "Mechanical Design - Theory and Practice," MacMillan Publishing Co., 1975, pp 719 to 748, particularly Section 14-2, pp 721 to 724.

The term "permanent" or "irreversibly heat set" as used herein applies to nonlinear carbonaceous fibers which have been heat treated until they possess a degree of irreversibility where the fibers, when stretched to a substantially linear shape, without exceeding their internal tensile strength, will substantially revert to their original nonlinear shape once the stress on the fibers is released.

The term "electrical resistance" as applied to the carbonaceous fibers employed in the present invention, applies to the electrical resistance of a 6K tow (6000 fibers) of carbonaceous fibers in which each fiber has a diameter of from 7 to 20 microns.

The term "foam," "foam body" or "foam structure" as used herein includes articles such as particles, sheets, slabs or other shaped articles.

All percentages set forth herein are in percent by weight.

In accordance with the present invention there is provided a flame retardant composite structure comprising a polymeric foam and at least 0.5 percent of nonflammable, substantially irreversibly heat set, linear and/or nonlinear carbonaceous fibers provided on at least one surface of the foam and/or distributed within the foam, with the proviso that linear carbonaceous fibers having an electrical resistance of less than $4 \times 10^3$ ohms/cm, when measured on a 6K tow of fibers having a diameter of from 7 to 20 micrometers, are excluded, and wherein said carbonaceous fibers having an LOI value of greater than 40.

In accordance with the present invention there is also provided a method for the production of a flame retardant composite comprising a polymeric foam, characterized by the step of reacting, in situ, a polymeric foam forming reaction mixture and applying to the reaction mixture from 0.5 to 30 percent of linear and/or nonlinear, stabilized, substantially irreversibly heat set, nonflammable, carbonaceous fibers having a LOI value of greater than 40, and an aspect ratio of greater than 10:1, with the proviso that linear carbonaceous fibers having an electrical resistance of less than $4 \times 10^3$ ohms/cm, when measured on a 6K tow of fibers having a diameter of from 7 to 20 micrometers, are excluded.

The present invention also contemplates, in particular, the use of polyurethane foams in airplanes. Fires in airplanes are difficult to extinguish when they start since adequate fire fighting equipment is not readily available because of weight and size limitations, the lack of storage on the aircraft, and the inability to maneuver around the passengers. It is therefore one preferred object of the invention to provide a polyurethane foam for use as a seat cushion which is fire retardant, does not melt or smolder, and which is self extinguishing.

The invention also contemplates the use of fire blocking structures, particularly in airplanes, comprising a layer of a polymeric foam, such as neoprene, and a layer of a wool-like fluff or batting made up of a multiplicity of carbonaceous fibers disposed on at least one surface of the polymeric foam.

The carbonaceous fibers that are employed in the invention have an LOI value of greater than 40, as determined by test method ASTM D 2863-77. The test method is also known as "oxygen index" or "limited oxygen index" (LOI). With this procedure the concentration of oxygen in $O_2/N_2$ mixtures is determined at which a vertically mounted specimen is ignited at its upper end and just continues to burn. The size of the specimen is 0.65 x 0.3 cm with a length of from 7 to 15 cm. The LOI value is calculated according to the equation:

$$LOI = \frac{[O_2]}{[O_2 + N_2]} \times 100$$

Advantageously, the carbonaceous fibers comprise nonflammable, linear and/or nonlinear, fibers having a diameter of from 7 to 20 microns and an aspect ratio (1/d) of greater than 10:1. The nonlinear carbonaceous fibers are resilient, shape reforming and have a reversible deflection ratio of greater than 1.2:1, preferably greater than 2:1. Both linear and nonlinear carbonaceous fibers have an LOI value of greater than 40 and, in combination with a polymeric foam, provide a synergistic effect with respect to the fire retarding and self-extinguishing characteristics of the foam.

Generally, a relatively small amount of the carbonaceous fibers can be utilized, i.e. less than 0.5 percent, based on the total weight of the foam and carbonaceous fiber composite, when the fibers are intended to be primarily on the outer surface of the foam. It will be understood, of course, that a larger amount of the carbonaceous fibers can be used when it is desired to construct a fire blocking structure. Such a structure may be in the form of a panel comprising a sheet of polymeric foam having a layer, e.g., a batting, felt, matt, scrim, woven fabric, or the like, of the carbonaceous fibers disposed on at least one surface of the foam such that the fibers constitute as much as 90 percent. The composite structure of the carbonaceous fibers and polymeric foam act, in combination, to retard flame propagation and to extinguishing any smoldering on the surface of the article or structure. To provide the composite structure throughout with similar fire retarding and self-extinguishing characteristics, the amount of carbonaceous fibers should be increased and the fibers distributed throughout the foam. Generally, in slab stock, it is preferable to use

3

from 5 to 30 percent nonlinear carbonaceous fibers. The slab stock can be cut into convenient sizes or shapes to provide the desired flame retardancy throughout the foam structure. When only linear carbonaceous fibers are utilized, it is preferable to utilize at least 10 percent of the fibers.

It has been surprisingly discovered that when carbonaceous fibers, especially nonlinear fibers, are added to a foam forming reaction mixture, a substantial portion of the carbonaceous fibers will become distributed on the exterior surface of the thus formed foam structure when the reaction mixture is not stirred. Even more surprising is the fact that the distribution is substantially uniform on the outer surface of the foam structure. Amounts of from 0.5 to 10 percent of carbonaceous fibers have been found to be sufficient to obtain a dependable distribution of carbonaceous fibers forming an effective flame retarding barrier on the exterior surface of the foam structure.

The amount of carbonaceous fibers required will depend upon the degree of flame retardation desired for the foam. However, the amount of carbonaceous fibers, when distributed throughout the foam, usually will not exceed about 30 percent so as to maintain the original physical characteristics of a substantial portion of the foam.

The carbonaceous fibers may comprise the sole flame retardant additive in the foam forming reaction mixture. Alternatively, other flame retardant additives, known per se, may be used in addition to the carbonaceous fibers such as, for example, halogen and/or phosphorous containing compounds, antimony oxides, boron containing compounds, and the like.

The carbonaceous fibers which may be utilized in the invention are preferably derived from oxygen stabilized and substantially permanently or irreversibly heat set carbonaceous fibers having a nitrogen content of up to 30 percent. These fibers are classified into three groups depending upon the particular use and the environment that the structures in which they are incorporated are placed.

In a first group, the nonflammable carbonaceous fibers are electrically nonconductive or do not possess any electrostatic dissipating characteristics. The term "electrically nonconductive" as used in the present application relates to carbonaceous fibers having a carbon content of greater than 65 percent but less than 85 percent and an electrical resistance of greater than $4 \times 10^6$ ohms/cm when measured on a 6K (6000 fibers) tow of fibers having a diameter of from 7 to 20 microns. The specific resistivity of the carbonaceous fibers is greater than about $10^{-1}$ ohm-cm. The specific resistivity of the fibers is calculated from measurements as described in the aforementioned published European Patent Application Ser. No. 0199567.

When the precursor fiber is a stabilized and heat set acrylic fiber, it has been found that a nitrogen content of 18 percent or higher results in an electrically nonconductive fiber.

In a second group, the carbonaceous fibers are classified as being partially electrically conductive, i.e. having low electrical conductivity. These fibers have a carbon content of greater than 65 percent but less than 85 percent. The percentage nitrogen content of such fibers is generally from 16 to 20 percent. In fibers derived from an acrylic terpolymers, the nitrogen content may be higher. Low conductivity means that a 6K tow of fibers in which the individual fibers have a diameter of from 7 to 20 micrometer, have a resistance of from $4 \times 10^6$ to $4 \times 10^3$ ohms/cm. Such fibers can be utilized to dissipate electrostatic buildup in the composite foam structure.

In a third group are carbonaceous fibers having a carbon content of at least 85 percent and a nitrogen content of less than 16 percent. These fibers, as a result of their high carbon content, have good electrical conductivity. That is, the fibers are substantially graphitic and have an electrical resistance of less than $4 \times 10^3$ ohms/cm and a nitrogen content of less than 5 percent. Correspondingly, the electrical resistivity of the fibers is less than $10^{-1}$ ohm-cm.

The precursor acrylic filaments which are preferably utilized in preparing the carbonaceous fibers are selected from acrylonitrile homopolymers, acrylonitrile copolymers and acrylonitrile terpolymers.

The acrylic copolymers and terpolymers preferably contain at least about 85 mole percent of acrylic units, preferably acrylonitrile units, and up to 15 mole percent of one or more monovinyl units copolymerized with styrene, methylacrylate, methyl methacrylate, vinyl chloride, vinylidene chloride, vinyl pyridine and the like.

It is to be further understood that carbonaceous precursor starting matterials may have imparted to them an electrically conductive property on the order of metallic conductors by heating the carbonaceous fiber, which may be in the form of a fiber tow, a yarn, a wool-like fluff, batting, or the like, to a temperature of greater than 1000° C. The electroconductive property may be obtained from selected precursor starting matterials such as pitch (petroleum or coal tar), polyacetylene, acrylonitrile based matterials, i.e., polyacrylonitrile (PANOXTM, a trademark of R. K. Textiles, or GRAFIL-01TM), polyphenylene and the like.

Preferred precursor matterials are prepared by melt spinning or wet spinning the precursor matterials in a known manner to yield a monofilament (generally having a diameter of from 4 to 25 micrometer) or multifilament fiber tow. The fibers, yarn or tow are then manufactured into a knitted cloth or woven fabric by any of a number of commercially available techniques. The resulting fabric or cloth is then heated, preferably to a temperature above 550°C to substantially permanently or irreversibly heat set the fibers. The term "permanent" or "irreversibly heat set" used herein applies to carbonaceous precurser matterial fibers which have been heat treated, while they are in a nonlinear, i.e., coil like or sinusoidal shape and under tension, until they possess a degree of irreversibility such that the nonlinear fibers, when stretched to a substantially linear shape, without exceeding their internal tensile strength, will substantially revert to their nonlinear configuration once the stress on the fiber is released. The fabric or cloth is thereafter subjected to a deknitting and opening operation to produce a wool-like fluff which may then be laid up in batting-like form.

The carbonaceous fibers, when found only on the exterior surface of the foam body, are preferably nonlinear, i.e., sinusoidal and/or coil-like; or of a more complicated nonlinear configuration. Advantageously, amounts of up to about 10 percent of the nonlinear fibers are utilized to produce a composite structure having the fibers primarily located on or near the outer surface of the foam body. In accordance with one embodiment of the invention, the reaction mixture for producing the foam is reacted while confined in a container or reaction vessel without stirring. When the fibers possess a nonlinear configuration the fibers are moved by the expanding foam mixture during the reaction so that they are concentrated at the surface or just below the surface of the foam.

In one examplary embodiment, the foam forming ingredients are reacted in a mold with the fibers in the form of a wool-like fluff being placed in the mold prior to introduction of the foam-forming reaction mixture into the mold. It will be understood that the mold can also be lined with a layer of a carbonaceous fiber structure in the form of a nonwoven matt, felt, web, or the like, or with a woven or knitted fabric or cloth. In such a case, linear and/or nonlinear carbonaceous fibers can be utilized.

In another embodiment of the invention, a composite foam structure was prepared having an effective amount of carbonaceous fibers distributed throughout the foam (slab stock) to provide flame retarding and fire extinguishing properties throughout the slab of foam. In such a case, the composite structure is prepared by admixing the fibers and the foam-forming reaction mixture while initiating the foam-forming reaction. The carbonaceous fibers may be present in an amount of up to about 30 percent without affecting, to any matterial extent, the original physical characteristics of the foam.

Preferably, the polymeric foam which may be utilized in the invention is selected from a polystyrene, polyolefin, urea, latex, polyurethane or isocyanurate foam. Epoxy resins can also be used as a binder for the carbonaceous fibers.

The polymeric foam may be formulated so as to be flexible, semi-rigid or rigid in nature. The composite foam structure of the invention can take the form of pellets, coatings, pads, panels, seating pads or cushions, cases, complex shaped structural objects, such as may be formed in a mold, or the like.

The polyurethane foams employed in the present invention are preferably prepared from a polyol reactant, which is mixed with an aqueous polyisocyanurate reactant. The foam thus produced is characterized by a cross-linked molecular network.

The polyols, used in the preparation of the polyurethane product to be foamed in accordance with the present invention, preferably have an average molecular weight of from 200 to 20,000, more preferably from 600 to 6,000, with a hydroxyl functionality of 2 or greater, preferably from 2 to 8.

The polyol is reacted with a polyisocyanate in a conventional manner in the presence of the carbonaceous fibers. The reaction can be carried out in an inert atmosphere, such as under a nitrogen blanket, at atmospheric pressure and at a temperature in the range of from 0°C to 120°C for a period of time ranging up to 20 hours, depending upon the temperature and the degree to which the reaction mixture is agitated. The reaction can also be carried out under ambient conditions.

The reaction is effected using stoichiometric amounts of reactants. It is desirable, however, in some cases to use an excess of polyisocyanate in order to insure complete reaction of the polyol. The ratio of isocyanate groups to hydroxyl groups is generally between 1 to 4 isocyanate groups per hydroxyl group.

The polyisocyanates employed in the reaction may include a polyaryl polymethylene polyisocyanate, such as disclosed in U.S. Patent No. 2,683,730, for example, benzene 1,3,5-triisocyanate; chlorophenyl diisocyanate; diphenyl-2,4,4'-triisocyanate; diphenylmethane-4,4'-diisocyanate; 3,3'-dimethoxy-4,4' biphenylene-diisocyanate, and the like.

Readily available aromattic diisocyanate, and cycloaliphatic diisocyanates and polyisocyanates or mixtures thereof, having a high degree of activity are suitable for use in the reaction.

Polystyrene foams used in the invention may be prepared by conventional methods. Presently known techniques for preparing expanded polystyrene include the extrusion of a thermoplastic resinous gel in admixture with a volatile blowing agent into a region of lower pressure where the volatile blowing agent vaporizes and forms a plurality of gas cells within the extruded gel. The extruded foamed gel is subsequently cooled to form a self-supporting cellular foamed body. A wide variety of blowing agents are known which primarily fall into the class of aliphatic hydrocarbons such as butane, hexane, heptane, pentanes, and the like, as well as gases (which are suitable in a polymer under pressure) such as carbon dioxide. Beneficially, certain fluorinated hydrocarbons are used such as trichlorofluoromethane, trifluoromethane and the like, as well as such chlorohydrocarbons as methyl chloride. Many of these blowing agents are found to be satisfactory with various polymeric matterials.

The following examples are illustrative of the invention.

Example 1

A flexible polyurethane foam was prepared by mixing in a one liter size cup, 100 parts by weight (pbw ) of a polyether triol having a average molecular weight of about 3000 (commercially available from The Dow Chemical Company as VORANOLTM 3137), 4,3 pbw water, 1.2 pbw of L-540 (a silicone surfactant commercially available from Union Carbide Corp.) and Dabco 33 LV (a mixture of 33% of triethylenediamine in propylene glycol commercially available from Air Products Co.).

The reaction was initiated by adding a separate mixture of 1.715 pbw of stannous octoate catalyst and 45.2 ml of a 80/20 mixture of 2,4- and 2,6-toluenediisocyanate under stirring. Stirring was stopped when the reaction mixture started to foam. The foaming mixture was immediately introduced into a 2 liter size cup that contained 1 pbw sinusoidal carbonaceous fibers which had previously been distributed over the intersurface of the cup. The foaming mixture filled the cup to produce a flexible foam with the carbonaceous fibers being incorporated into and/or over the outer portion of the expanding foam. The sample with the carbonaceous fibers distributed over the outer surface of the foam body were subjected to the flammability test as outlined in the following examples 4 and 5 and passed each of the tests.

Example 2

The procedure of Example 1 was repeated except that 10 pbw of linear carbonaceous fibers were utilized in lieu of the sinusoidal fibers. Also, the reaction mixture was continually mixed when the reaction started.

The resultant foam had the carbonaceous fibers distributed throughout from 0.2 to 0.4 mm. The foams provided excellent insulating value and relatively low density stable products.

In the following examples, a plurality of foams are prepared under varying conditions, each employing the hereinbefore described sampling procedure. In each case, a polymer is heat plastified in an extruder, substantially in the manner of U.S. Patent 2,669,751, and a volatile fluid blowing agent injected into the heat plastified polymer stream. From the extruder the heat plastified gel is passed into a mixer, the mixer being a rotary mixer wherein a studded rotor is enclosed within a housing which has a studded internal surface which intermeshes with the studs on the rotor. The heat plastified gel from the extruder is fed into one end of the mixer and discharged from the other end, the flow being in a generally axial direction. From the mixer, the gel passes through coolers, such as are described in U.S. Patent 2,669,751, and from the coolers to a die which extrudes a generally rectangular board. After extrusion, a foam of an acceptable density, cell size, compressive strength, water vapor permeability and thermal conductivity is obtained.

Example 3

Polystyrene having a viscosity of 14 centipoises (measured as a 10 percent solution in toluene) is fed to an extruder at the rate of 541 pbw per hour together with a mixture of coil-like and sinusoidal carbonaceous fibers having a nitrogen content of about 18.1 percent so as to amount to 20 percent of the resulting foam. The blowing agent consists of a 1:1 by weight mixture of methyl chloride and dichlorodifluoromethane which is injected into the heat plastified polymer prior to its entry to the mixer. A total feed of $20.3 \times 10^{-4}$ moles of blowing agent per gram of polystyrene is employed. 0.06 part of indigo per 100 parts of polystyrene is added as a nucleator. A stable rectangular board is extruded at a temperature of 121.5° C having a cross-sectional dimensions of 5.6 cm x 60 cm. The fibers were distributed fairly uniformly throughout the foam. The resulting foam possessed antistatic characteristics.

Example 4

Two flammability tests were run on a foam blended with carbonaceous fibers. Test A was the 45° Flammability Test (AATCC Test Method 33-1962 -Flammability of Clothing Textiles, which is duplicated by ASTM D1230 and ASA L14.69 and is the same as that described in Title 16-Commercial Practices part 1610 -Code of Federal U.S. Regulations). This test consists of impinging a 16 mm flame (butane) onto a 5 cm x 15 cm sample held at a 45° angle for one second. The samples of the invention failed to ignite even when the flame impingement was maintained for a period of 90 seconds.

The second test, Test B, was the 90° angle test used for children's sleepwear testing [see U.S. Dept. of Commerce Standard DOC FF 3071 (as amended) and FF5-74]. The method consists of exposing a 5 cm x 25 cm specimen suspended in a vertical position to a Bunsen burner (propane or methane gas) such that 19 mm of the lower edge of the specimen is in the flame for from 3 to 12 seconds. The specimens of the invention failed to ignite even after a period of ten minutes in the flame. This test is considered the most severe test method and is primarily designed to test for nonflammable or flame retardant fibers. The results are shown in the following table:

| Sample | Test | % Carbon Fiber | Fiber Heat Treatment Temp. (°C) | % Foam | Foam Type | Batting Thickness in mm |
|--------|------|----------------|----------------------------------|--------|-----------|--------------------------|
| 1 | A | 70 | 550 | 30 | Cured foam acrylic latex | 6.25 |
| 2* | - | 20 | 650 | 80 | Cured foam acrylic latex | 6.25 |
| 3 | B | 50 | 650 | 50 | DER cured epoxy | 3.20 |

*Sample 2 was tested by impinging an air/acetylene flame (flame temp. 2460°C) against the face of the sample for 30 seconds. The specimen failed to ignite or burn and the surface opposite the impingme t flame tip remained cool enough to touch with an unprotected finger.

All of the above specimens passed the respective test, that is, they all failed to ignite or burn under the test conditions used.

Example 5

The nonflammability of the composite foam structures of the invention has been determined following the test procedure set forth in 14 CFR 25.853(b). The test was performed as follows:

A minimum of three 2.5 cm x 16 cm x 30 cm composite foam/carbonaceous fiber specimens containing 30 percent of carbonaceous fibers were conditioned by maintaining the specimens in a conditioning room maintained at 70°C ± 5 percent relative humidity for 24 hours preceding the test. The foam was polyurethane.

Each specimen was supported vertically and exposed to a Bunsen burner with a nominal I.D. tube of 3.8 cm in height. The minimum flame temperature measured by a calibrated thermocouple pyrometer in the center of the flame was 843°C. The lower edge of the specimen was 1.9 cm above the top edge of the burner. The flame was applied to the cluster line of the lower edge of the specimens for 12 seconds and then removed.

Pursuant to the test, the matterial of the invention was considered self-extinguishing. The average burn length did not exceed 20 cm, the average after flame did not exceed 15 seconds and there were no flame drippings.

The same results can be achieved with urea, polystyrene, polyolefin, isocyanaurate, latex or epoxy foam structures.

Example 6

Following the procedure of U.S. Patent 4,640,933, a composite polyolefin foam structure is prepared having flame retarding characteristics by admixing in the reaction mixture, prior to expansion, 20 percent of sinusoidal carbonaceous fibers having a carbon content of about 85 percent. This specimen, too, failed to ignite or burn under the test conditions used in supra.

Having described the invention in detail and by reference to the preferred embodiments thereof, it will be apparent that modifications and variations, such as may be readily apparent to persons skilled in the art, are intended to be included within the scope of the invention as herein defined in the appended claims.

## Claims

1. A flame retardant composite structure comprising a polymeric foam and at least 0.5 % of nonflammable, substantially irreversibly heat set, linear and/or nonlinear carbonaceous fibers having an LOI value of greater than 40, provided on at least one surface of the foam and/or distributed within the foam, the linear fibers having an electrical resistance equal to or more than $4 \times 10^3$ ohms/cm, when measured on a 6 K tow of fibers each having a diameter of from 7 to 20 $\mu$m.

2. The composite structure of Claim 1, wherein said carbonaceous fibers have a diameter of from 7 to 20 microns and an aspect ratio of greater than 10:1.

3. The composite structure of Claims 1 or 2, wherein said nonlinear carbonaceous fibers have a sinusoidal and/or a coil-like configuration and a reversible deflection ratio of greater than 1.2:1.

4. The composite of Claim 1, 2 or 3, wherein said carbonaceous fibers are derived from stabilized polymeric precursor fibers or pitch based precursor fibers having a carbon content of greater than 65 percent.

5. The composite of Claim 4, wherein said polymeric precurser fibers are acrylic fibers selected from acrylonitrile homopolymers, acrylonitrile copolymers and acrylonitrile terpolymers, wherein said copolymers and terpolymers contain at least 85 mole percent acrylic units and up to 15 mole percent of one or more monovinyl units copolymerized with another polymer.

6. The composite of any one of the preceding claims, wherein said carbonaceous fibers have a carbon content of at least 85 percent, are electrically conductive, have an electrical resistance of less than about $4 \times 10^3$ ohms/cm and a specific resistivity of less than about $10^{-1}$ ohm-cm.

7. The composite of any one of Claims 1 to 5, wherein said carbonaceous fibers have a carbon content of less than 85 percent, are electrically nonconductive or do not possess any electrostatic dissipating characteristics, and have an electrical resistance of greater than $4 \times 10^3$ ohms/cm and a specific resistivity of greater than about $10^{-1}$ ohm-cm.

8. The composite of any one of Claims 1 to 5, wherein said carbonaceous fibers have a carbon content of less than 85 percent, have a low electrical conductivity and electrostatic dissipating characteristics, and have an electrical resistance of from $4 \times 10^6$ to $4 \times 10^3$ ohms/cm.

9. The composite structure of any one of the preceding claims, wherein said foam is a rigid, semi-rigid, or flexible polymeric matterial.

10. The composite structure of any one of the preceding claims, wherein said polymeric foam is selected from polyurethane, urea, latex, polyolefin, polystyrene or isocyanurate.

11. The composite structure of any one of the preceding claims, wherein at least 0.5 percent of said carbonaceous fibers are distributed substantially over the outer surface of said foam.

12. The composite structure of any one of Claims 1 to 10, wherein at least 10 percent of said linear carbonaceous fibers are distributed throughout said foam.

13. The composite structure of any one of Claims 1 to 11, wherein said foam contains from 0.5 to 30 percent of said carbonaceous fibers.

14. A method for the production of a flame retardant composite comprising a polymeric foam, characterized by the step of reacting, in situ, a polymeric foam forming reaction mixture and applying to the reaction mixture from 0.5 to 30 percent of linear and/or nonlinear, stabilized, substantially irreversibly heat set, non-flammable, carbonaceous fibers having a LOI value of greater than 40, and an aspect ratio of greater than 10:1, the linear carbonaceous fibers having an electrical resistance equal to or more than $4 \times 10^3$ ohms/cm, when measured on a 6K tow of fibers each having a diamter of from 7 to 20 micrometers.

15. The method of Claim 14, wherein the fibers are nonlinear and at least 0.5 percent of said carbonaceous fibers are distributed over at least one outer surface of said foam.

16. The method of Claims 14 or 15, including the step of distributing at least 10 percent of said linear carbonaceous fibers throughout said foam.

17. The method of Claim 14, 15 or 16, wherein said foam contains from 0.5 to 30 percent of said carbonaceous fibers.

18. A composite panel structure comprising a rigid polymeric foam panel having at least 0.5 percent linear and/or nonlinear, stabilized, substantially irreversibly heat set, nonflammable, carbonaceous fibers, having a LOI value of greater than 40 and an aspect ratio of greater than 10:1, distributed over at least one surface of the panel.

19. The composite panel structure of Claim 18, wherein said carbonaceous fibers are in the form of a wool-like fluff, batting, felt, mattt, scrim, or woven or nonwoven fabric.

20. A composite panel structure comprising a rigid foam panel having up to 30 percent linear and/or nonlinear, stabilized, substantially irreversibly heat set, nonflammable, carbonaceous fibers, having a LOI value of greater than 40 and an aspect ratio of greater than 10:1, distributed through the panel.

21. A foam cushion comprising a flexible foam having at least 0.5 percent linear and/or nonlinear, stabilized, substantially irreversibly heat set, nonflammable, carbonaceous fibers, having a LOI value of greater than 40 and an aspect ratio of greater than 10:1, distributed over at least one surface of the cushion.

22. The foam cushion of Claim 21, wherein said carbonaceous fibers are in the form of a wool-like fluff, batting, felt, mattt, scrim, or woven or non-woven fabric.

23. A foam cushion comprising a flexible foam having up to 30 percent linear and/or nonlinear, stabilized, substantially irreversibly heat set, nonflammable, carbonaceous fibers, having a LOI value of greater than 40 and an aspect ratio of greater than 10:1, distributed through the cushion.